# EUROPEAN PATENT APPLICATION

(11) **EP 3 902 339 A1**
(43) Date of publication of application: **27.10.2021**
(21) Application number: 18943589.4
(22) Date of filing: 20.12.2018
(51) Int. Cl.: H04W 56/00

(54) **WIRELESS NODE AND WIRELESS COMMUNICATION METHOD**

(71) Applicant: NTT DoCoMo, Inc., Tokyo 100-6150 (JP)
(72) Inventor: HARADA, Hiroki, Tokyo 100-6150 (JP); TAKEDA, Kazuaki, Tokyo 100-6150 (JP)
(74) Representative: Hoffmann Eitle
(86) International application number: PCT/JP2018/047124
(87) International publication number: WO 2020/129228

(57) **Abstract**

A radio node includes a reception section that receives configuration information for at least one of transmission and measurement of a signal including information on synchronization, and a control section that controls a timing of at least one of the transmission and measurement of the signal based on the configuration information.

## Description

### Technical Field

The present disclosure relates to a radio node and a radio communication method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

For future radio communication systems (e.g., 5G), a technique of Integrated Access and Backhaul (IAB) that integrates an access link and a backhaul link has been studied. In IAB, a radio node like an IAB node forms a radio access link with a User Equipment (UE), and also forms a wireless backhaul link with another IAB node and/or a radio base station.

### Citation List

### Non-Patent Literature

Non-Patent Literature 1
   3GPP TR 38.874 1.0.0, "3rd Generation Partnership Project; Technical Specification Group Radio Access Network; Study on Integrated Access and Backhaul; (Release 15)," December 2018
Non-Patent Literature 2
   3GPP TSG RAN WG1 Meeting #95 R1-1813417 "Enhancements to support NR backhaul links," Qualcomm Incorporated November 2018

### Summary of Invention

### Technical Problem

However, inter-radio-node discovery has not been studied comprehensively, so that further studies are demanded.

An object of one aspect of the present disclosure is to provide a radio node and a radio communication method making it possible to appropriately perform the inter-radio-node discovery.

### Solution to Problem

A radio node according to one aspect of the present disclosure includes: a reception section that receives configuration information for at least one of transmission and measurement of a signal including information on synchronization; and a control section that controls a timing of at least one of the transmission and measurement of the signal based on the configuration information.

### Advantageous Effects of Invention

According to the present disclosure, it is possible to appropriately perform inter-radio-node discovery.

### Brief Description of Drawings

FIG. 1 illustrates a configuration example of a radio communication system according to one aspect of the present disclosure;
FIG. 2 illustrates a configuration example of IAB nodes according to one aspect of the present disclosure;
FIG. 3 is an explanatory view for explaining Synchronization Signal block (SSB) based Radio Resource Management (RRM) measurement timing configuration (SMTC) and SSB transmission timing configuration (STTC) according to one aspect of the present disclosure;
FIG. 4 illustrates an exemplary configuration of SMTC according to one aspect of the present disclosure;
FIG. 5 illustrates an exemplary configuration of an STTC pattern according to one aspect of the present disclosure;
FIG. 6A illustrates a first example of configuration information for measurement according to one aspect of the present disclosure;
FIG. 6B illustrates an example of configuration information on SMTC according to one aspect of the present disclosure;
FIG. 7A illustrates a second example of the configuration information for measurement according to one aspect of the present disclosure;
FIG. 7B illustrates a second example of the configuration information on SMTC according to one aspect of the present disclosure;
FIG. 8 illustrates an exemplary parameter relating to identification information on SMTC according to one aspect of the present disclosure;
FIG. 9 illustrates an example of configuration information on an STTC muting pattern according to one aspect of the present disclosure;
FIG. 10 illustrates an example of the STTC muting pattern according to one aspect of the present disclosure; and
FIG. 11 illustrates an example of a hardware configuration of the IAB node and a user equipment according to one aspect of the present disclosure.

### Description of Embodiment

Hereinafter, an embodiment according to one aspect of the present disclosure will be described with reference to the accompanying drawings.

### <Radio Communication System>

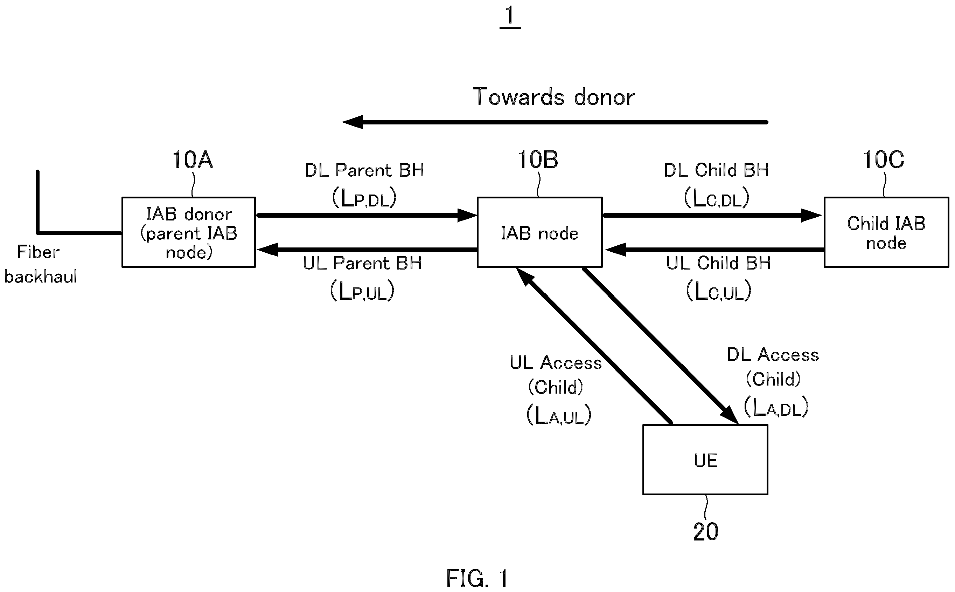

FIG. 1 illustrates a configuration example of a radio communication system according to one embodiment of the present disclosure.

Radio communication system 1 includes a plurality of IAB nodes 10A to 10C as one example of radio nodes, and UE 20 as one example of a user equipment. Hereinafter, to describe IAB nodes 10A to 10C without distinguishing them from one another, only the numeral common to the reference signs may be used as in "IAB nodes 10."

IAB nodes 10A to 10C are interconnected to one another by radio communication. IAB node 10B is connected to IAB node 10A in FIG. 1. IAB node 10C is connected to IAB node 10B. Hereinafter, IAB node 10A located upstream (that is, in the direction nearer an IAB donor) as seen from IAB node 10B is called parent IAB node 10A, and IAB node 10C located downstream (that is, in the direction away from the IAB donor) as seen from IAB node 10B is called child IAB node 10C.

The term "parent IAB node 10A" denotes that IAB node 10A is a parent IAB node with respect to IAB node 10B, and the term "child IAB node 10C" denotes that IAB node 10C is a child IAB node with respect to IAB node 10B. In other words, IAB node 10B corresponds to a child IAB node with respect to "parent IAB node 10A," and corresponds to a parent IAB node with respect to "child IAB node 10C."

Each of IAB nodes 10A to 10C forms a cell, which is an area in which the IAB node is able to perform radio communication. That is, each of IAB nodes 10 has a function as a base station. UE 20 in a cell is able to connect by radio to IAB node 10 forming the cell.

IAB node 10A may also be connected to a Core Network (CN) through a Fiber Backhaul (BH). In this case, IAB node 10A may also be called "IAB donor." In addition, although FIG. 1 illustrates three IAB nodes 10 and one UE 20, any number of IAB nodes 10 and any number of UEs 20 may be included in radio communication system 1. There may also be two or more parent IAB nodes with respect to one IAB node 10 and two or more child IAB nodes with respect to one IAB node 10.

Note that, Ls and their respective subscripts illustrated in FIG. 1 denote the following:
- "L_{P,DL}" denotes a Downlink (DL) from parent IAB node 10A to IAB node 10B;
- "L_{P,UL}" denotes a Uplink (UL) from IAB node 10B to parent IAB node 10A;
- "L_{C,DL}" denotes the DL from IAB node 10B to child IAB node 10C;
- "L_{C,UL}" denotes the UL from child IAB node 10C to IAB node 10B;
- "L_{A,DL}" denotes the DL from IAB node 10B to UE 20; and
- "L_{A},_{UL}" denotes the UL from UE 20 to IAB node 10B.

### <IAB Node>

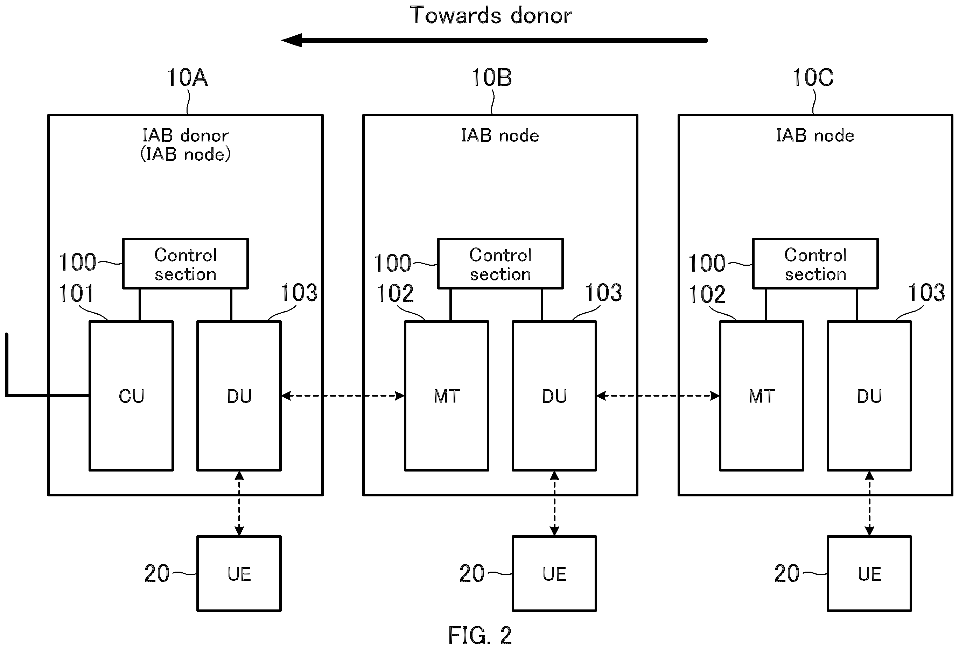

FIG. 2 illustrates a configuration example of IAB nodes 10.

As illustrated in FIG. 2, IAB donor 10A includes control section 100, Control Unit (CU) 101, and Distributed Unit (DU) 103. Each of IAB nodes 10B and 10C includes control section 100, Mobile-Termination (MT) 102, and DU 103. Note that, CU 101, MT 102, and DU 103 may be functional blocks. Hereinafter, CU 101 may be expressed as "CU" without the reference sign for expressing a function of CU 101. Note also that, MT 102 may be expressed as "MT" without the reference sign for expressing a function of MT 102, and DU 103 may be expressed as "DU" without the reference sign for expressing a function of DU 103. DU 103 may have functions corresponding to those of the base station or an extension station. One example of MT 102 may have functions corresponding to those of the user equipment.

IAB node 10B is connected to an upstream IAB node (IAB donor 10A in FIG. 2) by MT 102. That is, MT 102 of IAB node 10B treats connection to parent IAB node 10A.

IAB node 10B is connected to UE 20 and to the MT of downstream IAB node 10C by DU 103. That is, DU 103 of IAB node 10B treats connection to UE 20 and to child IAB node 10C. The connection to UE 20 and/or to child IAB node 10C by DU 103 is establishment of a Radio Resource Control (RRC) channel, for example.

Control section 100 controls MT 102 (CU 101 in the case of IAB donor 10A) and DU 103. Note that, operation of IAB node 10 described below may be implemented by control section 100 controlling MT 102 (CU 101 in the case of the IAB donor) and DU 103. Control section 100 may also be provided with a storage section for storing therein a variety of information.

Parent IAB node 10A indicates the following time resources for a link with parent IAB node 10A (hereinafter, referred to as "parent link") from a viewpoint of MT 102 of IAB node 10B:
- DL time resource (time resource used for DL);
- UL time resource (time resource used for UL); and
- Flexible (hereinafter, referred to as "FL") time resource (time resource used for DL or UL).

IAB node 10B, from a viewpoint of DU 103 of IAB node 10B, has the following types of time resources for a link between IAB node 10B and child IAB node 10C, and/or, for a link between IAB node 10B and UE 20 (these links are hereinafter referred to as "child link"):
- DL time resource;
- UL time resource;
- FL time resource; and
- Not-available (hereinafter, referred to as "NA") time resource (a resource which is not used for communication over each of the child links of the DU).
Note that, the "type" of a resource may be replaced with other terms such as "use," "kind," "class," "category," or "attribute" of the resource.

Each of the DL, UL, and FL time resources for the child link of the DU belongs to one of the following two classifications:
- Hard: the time resource corresponding to this classification is always available for the child link of the DU; and
- Soft: the availability of the time resource corresponding to this classification for the child link of the DU is controlled by parent IAB node 10A explicitly and/or implicitly.

### <Study>

3PGG has studied transmitting and/or measuring an SSB orthogonal (e.g., orthogonal in TDM and/or FDM) to and different from an SSB for a UE in a case of using SSBs for inter-IAB-node discovery and/or measurement. Note that 3GPP is an abbreviation for Third Generation Partnership Project. Note also that TDM is an abbreviation for Time Division Multiplexing. Note also that FDM is an abbreviation for Frequency Division Multiplexing.

Application of mutually-different muting patterns to IAB nodes is also studied considering a half-duplex constraint whereby transmission and reception cannot be performed simultaneously. Note that, each of the muting patterns is a pattern relating to configuration of a measurement timing and/or a transmission timing for SSB. In other words, muting may be not performing measurement and/or transmission of a SSB. Note that, the muting patterns will be described in detail below.

For the purpose of wireless backhaul link RSRP/RSRQ RRM measurements, the IAB noes may support both SSB-based and CSI-RS based solutions. Note that RSRP is an abbreviation for Reference Signal Received Power. RSRQ is an abbreviation for Reference Signal Received Quality. Note also that CSI-RS is an abbreviation for Channel State Information Reference Signal.

For the purpose of inter-IAB-node and IAB donor discovery after the IAB-node DU becomes active (hereinafter, referred to as "Stage 2"), the inter-IAB-node discovery procedure needs to take into account the half-duplex constraint at an IAB node and multi-hop topologies. For example, the IAB node may support the following (A1) and (A2) of the SSB-based solutions.
(A1) The IAB nodes may reuse the same set of SSBs used for access UEs. Here, each of the access UEs is a UE that accesses an IAB node. In this case, the SSBs for inter-IAB-node cell search in stage 2 are arranged on a currently defined sync raster for a Standalone (SA) frequency layer, while for a Non Standalone (NSA) frequency layer the SSBs for the inter-IAB-node cell search are transmitted inside of the SMTC configured for the access UEs. Here, the sync raster may be a frequency searched for by a UE for initial access.
(A2) The IAB nodes may use SSBs which are orthogonal (orthogonal in TDM and/or FDM) to SSBs used for access UEs. In this case, the SSBs, that may get muted, for inter-IAB-node cell search and measurement in stage 2 are not arranged on a currently defined sync raster for a SA frequency layer, while for a NSA frequency layer the orthogonal SSBs are transmitted at an SMTC different from the SMTC configured for the access UEs.

Note that the IAB nodes may not mute SSB transmissions targeting UE cell search and measurement when performing inter-IAB-node cell search in stage 2. For the SA frequency layer, this means that the SSBs transmitted on the currently defined sync raster follow a currently defined periodicity for initial access. Further, in the case of above (A2), this implies that the SSBs, that may get muted, for inter-IAB-node stage 2 cell search are at least TDM with SSBs used for UE cell search and measurement.

In addition, Non-Patent Literature 2 proposes the following for enhancing the flexibility in configuration for the inter-IAB-node discovery and/or measurement.
- The SMTC for IAB-node discovery supports a period longer than 160 ms which is the largest period of the SMTC for access UEs.
- The maximum number of SMTC windows that can be configured per frequency is increased to more than two.
- As for an SSB transmission pattern within an SMTC, a more flexible SSB transmission pattern may be supported.
- SSB transmission timing configuration (STTC) is made configurable.

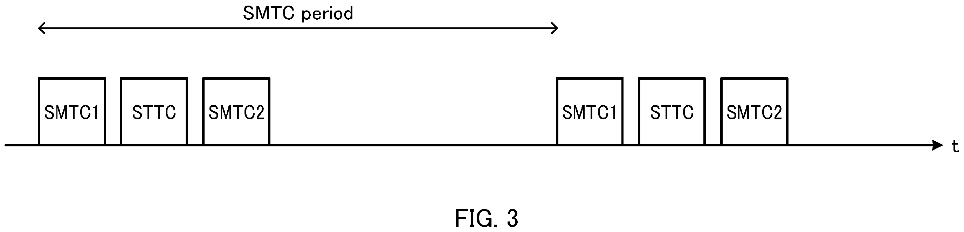

As illustrated in FIG. 3, SMTC timings for SSB measurement and STTC timings for SSB transmission may be included within a SMTC period. In this case, IAB node 10 may measure an SSB transmitted from a neighboring IAB node at the SMTC timings and may transmit an SSB to a neighboring IAB node at the STTC timings.

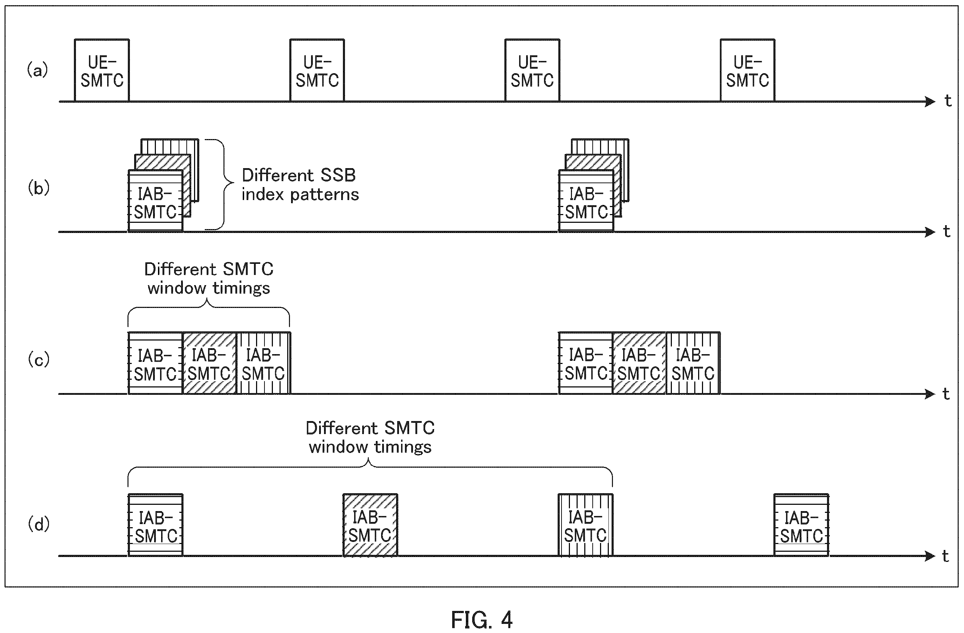

Next, SMTC configured for each of three IAB nodes 10 will be described as one example of the above description with reference to FIG. 4.

As illustrated at (a) in FIG. 4, SMTC timings for a UE ("UE-SMTCs" in FIG. 4) may be configured for each of three IAB nodes 10. The three IAB nodes transmit an SSB to UE 20 at UE-SMTCs. SMTC timings for an IAB node ("IAB-SMTCs" in FIG. 4) may also be configured for each of three IAB nodes 10. Here, IAB-SMTCs configured for each of IAB nodes 10 are orthogonal to each other. IAB-SMTCs are also orthogonal to UE-SMTCs.

Examples of IAB-SMTCs orthogonal to each other are illustrated at (b), (c), and (d) in FIG. 4, respectively.

As illustrated at (b) in FIG. 4, IAB-SMTCs may have SSB index patterns different from one another. For example, first IAB-SMTC may be of SSB indices #1 to #3, second IAB-SMTC may be of SSB indices #4 to #6, and third IAB-SMTC may be of SSB indices #7 to #9.

As illustrated at (c) and (d) in FIG. 4, IAB-SMTCs may be window timings different from one another. IAB-SMTCs may also be contiguous as illustrated at (c) in FIG. 4 or noncontiguous as illustrated at (d) in FIG. 4.

Further, differences in hatching pattern of IAB-SMTCs illustrated at (b), (c), and (d) in FIG. 4 above represent differences in STTC pattern. For example, it is assumed that a first STTC pattern of horizontal stripes is set for the first IAB node, a second STTC pattern of diagonal lines is set for the second IAB node, and a third STTC pattern of vertical stripes is set for the third IAB node. In this case, IAB-SMTCs marked with horizontal stripes may be used by the first IAB node as STTC (i.e., for transmitting an SSB), and by the second and the third IAB nodes as SMTC (i.e., for measuring an SSB). Further, IAB-SMTCs marked with diagonal lines may be used by the second IAB node as STTC (i.e., for transmitting an SSB), and by the first and the third IAB nodes as SMTC (i.e., for measuring an SSB). Further, IAB-SMTCs marked with vertical stripes may be used by the third IAB node as STTC (i.e., for transmitting an SSB), and by the first and the second IAB nodes as SMTC (i.e., for measuring an SSB).

In the meantime, when STTC and SMTC are configured separately, it is assumed that the IAB node transmits an SSB at timings or at a periodicity configured as STTC, and detects and measures an SSB from a neighboring IAB node at timings or at a periodicity configured as SMTC.

In this case, the IAB nodes configured with common STTC timings cannot detect and measure each other due to the half-duplex constraint. That is, since the IAB nodes configured with the common STTC timings transmit SSBs at the common STTC timings, each of the IAB nodes cannot receive the SSB of the other IAB node at this timings.

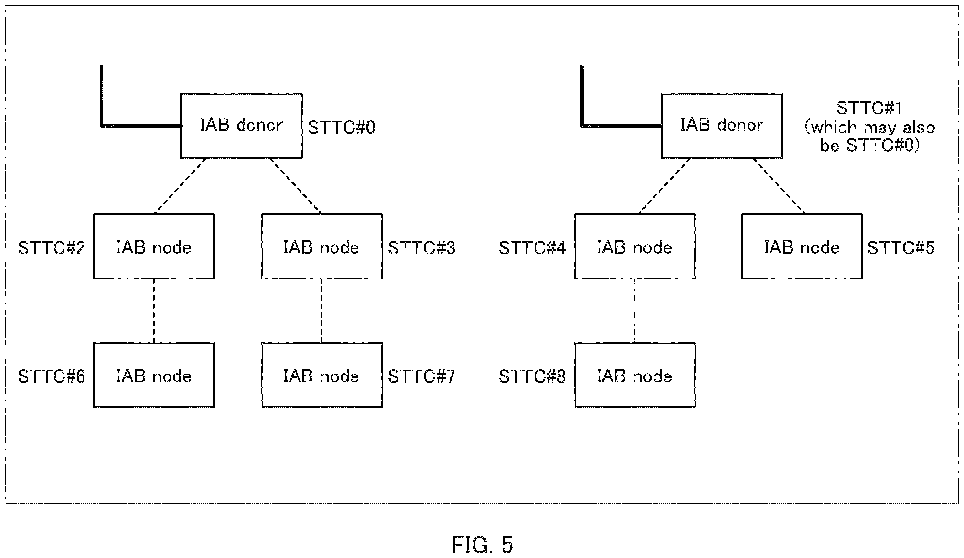

It is considered that one way to avoid this is to configure mutually different STTCs. For example, the IAB nodes are configured with mutually different STTCs #0 to #8 as illustrated in FIG. 5. The following may be useful to configure the IAB nodes with mutually different STTCs:
- Network (NW) (e.g., the CU of the IAB donor) manages STTCs configured for the IAB nodes; and
- A plurality of SMTC patterns corresponding to a plurality of mutually orthogonal STTC patterns are prepared. For example, "the number of STTC patterns - 1" patterns of SMTC are prepared and IAB nodes 10 are configured with the SMTC patterns.

However, the above-described avoidance methods may involve reviewing or changing of the STTC configurations for the IAB nodes every time a new IAB node is added or every time an STTC pattern for anther IAB node located under a CU is updated.

In this respect, a description will be given of Examples 1 to 3 as examples in which, even when a new IAB node is added or the configuration for an existing IAB node is changed, another neighboring IAB node is capable of autonomously or easily configuring appropriate SMTC and/or STTC. Note that, Examples 1, 2, and 3 may be implemented in combination with each other or may be implemented by switching each other.

### <Example 1>

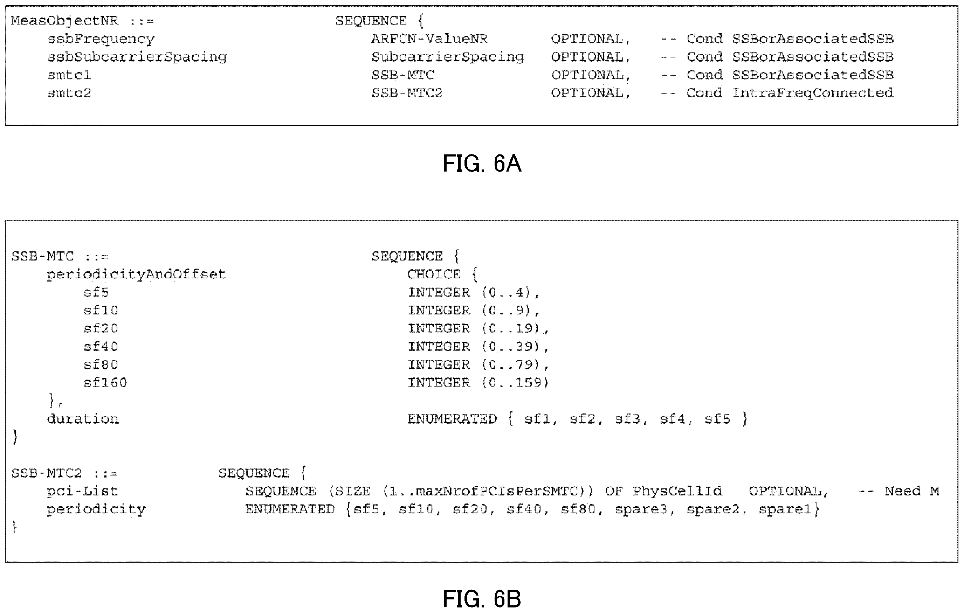

More than two SMTCs per frequency are configurable for each of IAB nodes 10. For example, the configuration information "MeasObject" for measurement illustrated in FIGS. 6A and 6B is partially modified in order to make it possible to configure a plurality of SSB-MTCs (i.e., SMTCs) in a list format.

Here, the maximum number (upper limit) of configurable SMTCs may be defined by specifications. Alternatively, the maximum number (upper limit) of configurable SMTCs may be reported as a capability from IAB nodes 10.

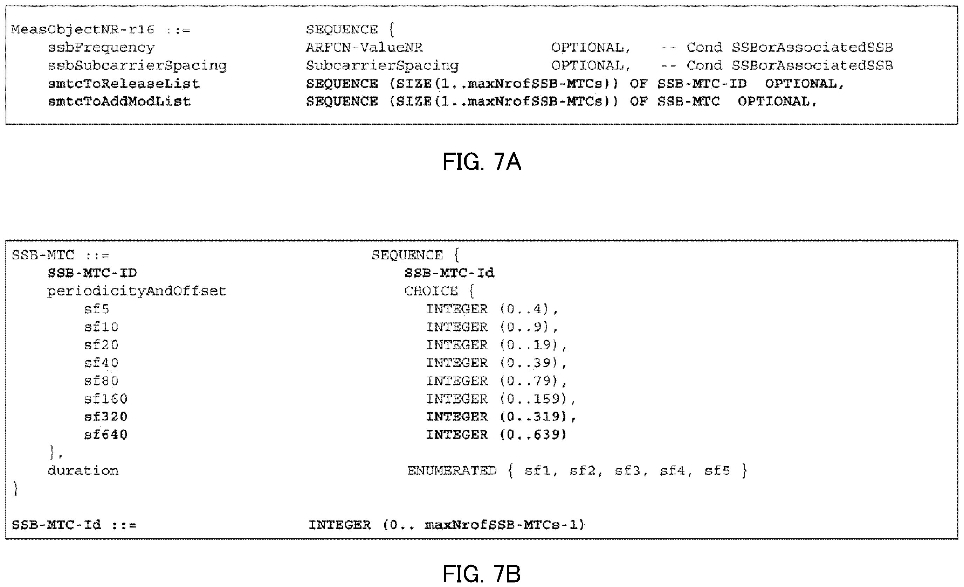

FIGS. 7A and 7B illustrate examples of configuration information for measurement according to Example 1.

As indicated in bold in FIG. 7A, the configuration information "MeasObjectNR" for measurement may include a parameter for designating the number of SSB-MTCs to be released and a parameter for designating the number of SSB-MTCs to be added or modified. The parameter for designating the number of SSB-MTCs to be released is hereinafter referred to as "smtcToReleaseList" for convenience, but is not particularly limited to this name. In addition, the parameter for designating the number of SSB-MTCs to be added or modified is referred to as "smtcToAddModList" for convenience, but is not particularly limited to this name.

Further, as indicated in bold in FIG. 7B, the configuration information "SSB-MTC" for SSB-MTC may include a parameter for identifying SSB-MTC. Hereinafter, such a parameter is referred to as "SSB-MTC-ID" for convenience, but is not particularly limited to this name. The configuration information "SSB-MTC" may also include a parameter "sf320" for designating a periodicity of 320 ms and/or a parameter "sf640" for designating a periodicity of 640 ms as options for SMTC periodicity configuration.

Further, as indicated in bold in FIG. 7B, the above parameter "SSB-MTC-ID" may be a value of from 0 to ("maxNrofSSB-MTCs" - 1). Here, "maxNrofSSB-MTCs" is the maximum number of configurable SSB-MTCs. IAB node 10 may determine "maxNrofSSB-MTCs" based on a predetermined value (e.g., "8") specified in the specifications. Alternatively, IAB node 10B may determine "maxNrofSSB-MTCs" based on the number of configurable SSB-MTCs reported as the capability from the MT of child IAB node 10C. Note that, the parameter indicating the maximum number of configurable SSB-MTCs is referred to as "maxNrofSSB-MTCs" for convenience, but is not particularly limited to this name.

According to the configuration information illustrated in FIGS. 7A and 7B, it is possible to efficiently enhance the flexibility in configuration of SMTC for the IAB nodes. For example, while it is conceivable to newly provide "SSB-MTC3" to define the above-mentioned new parameters as illustrated in FIG. 6B, the configuration information illustrated in FIGS. 7A and 7B makes it possible to compactly achieve a higher flexibility than in the case of FIG. 6B.

### <Example 2>

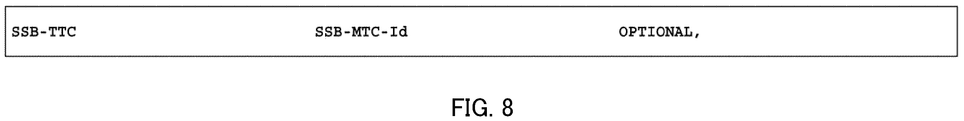

IAB node 10B may explicitly designate, to child IAB node 10C, at least one of a plurality of configured SMTCs which is to be used as STTC. Note that, the plurality of SMTCs may be configured by the configuration information described in above Example 1. For example, each of the SSB-MTCs may be given an ID ("SSB-MTC-ID" in FIG. 7B), and IAB node 10B may designate SMTC used as STTC using SSB-MTC-ID. Note that "SSB-MTC-ID" may be expressed as "SMTC-ID." FIG. 8 is one example of a parameter for designating SSB-TTC (STTC) using SSB-MTC-ID. Additionally or alternatively, SMTC may be notified as a configuration for the MT of IAB node 10, and STTC may be notified as a configuration for the DU of IAB node 10. That is, the configuration of SMTC and the configuration of STTC may be notified using different Information Elements. Alternatively, STTC may be designated in the configuration information "MeasObject" for configuring SMTC.

Note that child IAB node 10C may autonomously select as STTC any one of a plurality of configured SMTCs (SSB-MTCs) when no SMTC-ID of SMTC to be used as STTC is designated. For example, child IAB node 10C may perform measurement at each of the SMTCs to select, as STTC, SMTC of the lowest detection level. This makes it possible for child IAB node 10C to select, as STTC, SMTC which is highly unlikely to be used as STTC by neighboring IAB nodes. Further, child IAB node 10C may include, in Measurement Report (MR), SMTC-ID of SMTC selected as STTC in this case. Here, when a measurement result for IAB node 10 which should have been installed near child IAB node 10C is not included in the MR from this child IAB node 10C, it is highly probable that STTC selected autonomously by this child IAB node 10C is the same STTC as selected by a neighboring IAB node 10. In this case, the Network (NW) (or the CU of IAB donor 10A) may reconfigure child IAB node 10C with STTC different from STTC included in the MR from child IAB node 10C.

Alternatively, the DU of child IAB node 10C may recognize that the DU does not transmit any SSB for inter-IAB-node discovery when no STTC is designated. For example, IAB node 10, which can only be a child IAB node (or which cannot be a parent IAB node), may recognize that such IAB node 10 does not transmit any SSB for inter-IAB-node discovery when no STTC is indicated. Note that the term "recognize" may be replaced with other terms such as "suppose," "determine," or "judge." Note also that, the term "designate" may be replaced with other terms such as "indicate," "notify," or "configure."

When no STTC is designated, child IAB node 10C may switch between a process of recognizing that STTC is to be selected autonomously and a process of recognizing that no SSB is to be transmitted for inter-IAB-node discovery as described above. Switching is performed based on whether or not this child IAB node 10C has the capability of being a parent IAB node.

IAB node 10 may have STTC for UEs (hereinafter referred to as "UE-STTC") and STTC for inter-IAB-node discovery (hereinafter referred to as "IAB-STTC"), separately. As for at least IAB-STTC among these UE- and IAB-STTCs, any one of configured SMTCs may be used as STTC. STTC may be designated by SMTC-ID as in above Examples 2-1. Alternatively, STTC may be designated by SSB transmission timing configuration for configuring this STTC without using SMTC-ID.

Additionally or alternatively, UE-STTC and IAB-STTC may be designated by configured SMTC. In this case, an SSB transmission frequency may be configurable for each of UE-STTC and IAB-STTC. That is, frequency positions for the SSB transmissions may be different between UE-STTC and IAB-STTC.

Additionally or alternatively, IAB-STTC may also be designated by configured SMTC, and UE-STTC may be configured separately. In this case, the SSB transmission frequency may be configurable for each of UE-STTC and IAB-STTC. That is, frequency positions for the SSB transmissions may be different between UE-STTC and IAB-STTC.

### <Example 3>

IAB node 10 is capable of being configured with a muting pattern for STTC. That is, IAB node 10 may support aperiodic STTC. For example, IAB node 10 may stop transmitting an SSB at some of the timings, in part of the periodicity, or in part of the period configured as an STTC pattern so as to be capable of measuring a neighboring IAB node to which the same STTC pattern is applied.

Alternatively, IAB node 10 is capable of being configured with a muting pattern for SMTC. That is, IAB node 10 may support aperiodic SMTC. For example, IAB node 10 may stop measuring an SSB at some of the timings, in part of the periodicity, or in part of the period configured as an SMTC pattern so as to be capable of SSB transmission to a neighboring IAB node to which the same SMTC pattern is applied.

Next, Examples 3-1 and 3-2, which exemplify the above descriptions, will be described.

### «Example 3-1»

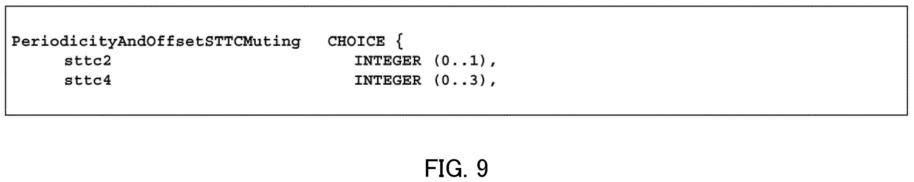

The periodicity and offset for STTC muting described above may be configured, for example, by the configuration information illustrated in FIG. 9. Hereinafter, the configuration information for the periodicity and offset for STTC muting is referred to as "PeriodicityAndOffsetSTTCMuting" for convenience, but is not particularly limited to this name.

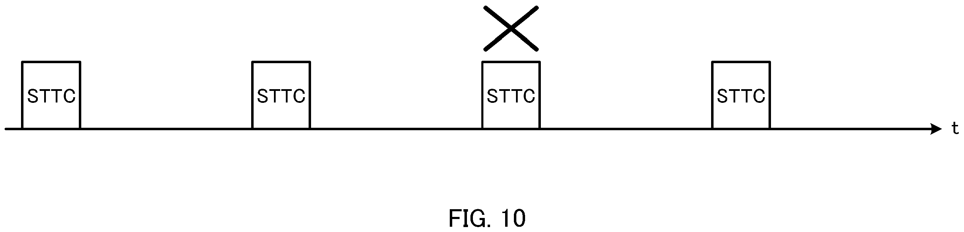

As illustrated in bold in FIG. 9, the configuration information "PeriodicityAndOffsetSTTCMuting" may include a parameter for selecting a STTC muting pattern. For example, the parameter "sttc2" is a parameter for configuring, out of two STTCs, STTC for muting. In addition, the parameter "sttc4" is a parameter for configuring, among four STTCs, STTC for muting. For example, when the parameter "sttc4" is "2," muting is performed at the third STTC among the four STTCs as illustrated in FIG. 10.

Note that the configuration information of the periodicity and offset for SMTC muting described above may also be the same as the configuration information of FIG. 9.

### «Example 3-2»

STTC muting patterns corresponding to cell IDs (e.g., mod(CellID,N)) may be specified in specifications. Alternatively, SMTC muting patterns corresponding to cell IDs may be specified in specifications.

When the STTC (or SMTC) muting patterns corresponding to the cell IDs are known, IAB node 10 that performs measurement can recognize a muting pattern configured for a neighboring IAB node. Thus, IAB node 10 that performs measurement may deterministically or definitely perform processes such as combination and reception and/or averaging during measurement.

According to Example 3 described above, STTC (or SMTC) muting can ensure orthogonality, so that it is possible to reduce an increase in the number of orthogonal SMTC patterns.

### <Modification>

Next, a description will be given of modifications of the above examples.

Measurement may not be performed at SMTC selected as STTC. Alternatively, when measurement is performed at SMTC selected as STTC, looser performance specifications (e.g., looser measurement accuracy) than specifications for measurement at other SMTCs may be applied at the SMTC selected as STTC.

Implicit or explicit indication on whether or not measurement is to be performed at the SMTC selected as STTC may be made.

Next, an example of implicit indication will be described. When configured with an STTC (or SMTC) muting pattern, IAB node 10 may recognize that measurement may be performed at the SMTC selected as STTC. When not configured with any STTC (or SMTC) muting pattern, IAB node 10 may recognize that measurement may not be performed at the SMTC selected as STTC.

Next, an example of explicit indication will be described. An information element different from that indicating a muting pattern may indicate to IAB node 10 whether or not measurement is to be performed. In addition, this explicit indication may be performed in a case where no muting pattern is explicitly designated as in above Example 3-2.

It may depend on the implementation of the IAB node whether or not measurement is performed at SMTC selected as STTC. For example, an IAB node that is not subject to the half-duplex constraint may perform measurement at the SMTC selected as STTC, and an IAB node that is subject to the half-duplex constraint may not perform measurement at the SMTC selected as STTC.

In order for the DU of the IAB node to transmit an SSB, the SSB transmission timing configuration may be configured for the DU. For example, at least one of the SSB transmission timing configuration for access UEs (e.g., STTC1 or UE-STTC) and the SSB transmission timing configuration for neighboring IAB nodes (e.g., STTC2 or IAB-STTC) may be configured for the DU. Each of the STTCs may include at least one of the following:
- Periodicity and timing offset for SSB transmission;
- SSB transmission frequency; and
- Bitmap of SSB transmission index.

Note that, as the periodicity for SSB transmissions, any one of the values of 5, 10, 20, 40, 80, and 160 ms, which are the same as the candidate values for the SMTC periodicity, may be configured for the STTC for UEs, while even a value longer than 160 ms may be configured for the STTC for IAB. Note also that, an offset value of a granularity of 1 ms or a granularity of 5 ms as in SMTC may be configurable as the timing offset for SSB transmissions.

Note also that, in order for the MT of the IAB node to measure an SSB, SSB measurement timing configuration may be configured for the MT. For example, the SSB measurement timing configuration (e.g., SMTC1, SMTC2, SMTC3, ..., or the like) corresponding to the SSB transmission timings for each neighboring IAB node may be configured for the MT.

Note also that, the SSB transmission timing configuration for access UEs (STTC1 or UE-STTC) may be different from the SSB transmission timing configuration for neighboring IAB nodes (STTC2 or IAB-STTC) not only in timing or periodicity but also in SSB transmission frequency.

Note also that, instead of designation of a transmission SSB index in STTC, the DU of the IAB node may determine the transmission SSB index. Note also that, the DU of IAB node 10B may report the number of transmission SSBs as the capability to parent IAB node 10A, and parent IAB node 10A may designate transmission SSB indices to IAB node 10B by STTC.

Note also that, the names of the above configuration information and parameters are examples. That is, the names of the configuration information and the parameters of the present disclosure may be different from those described above.

### <Summary of Disclosure>

The radio node (IAB node) according to the present disclosure includes a reception section that receives configuration information for transmission and/or measurement of an SSB, and a control section that performs control of using as STTC at least one of a plurality of SMTCs based on the configuration information.

Further, the configuration information may include an SMTC-ID for identifying each of the SMTCs. Further, SMTC to be used as STTC may be designated using this SMTC-IDs.

According to the above configuration, it is possible to appropriately perform inter-radio-node discovery. Further, each radio node is capable of autonomously configuring appropriate SMTC and/or STTC.

The present disclosure has been described above.

### <Hardware Configuration and/or the like>

Note that, the block diagrams used to describe the above embodiment illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or by radio), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

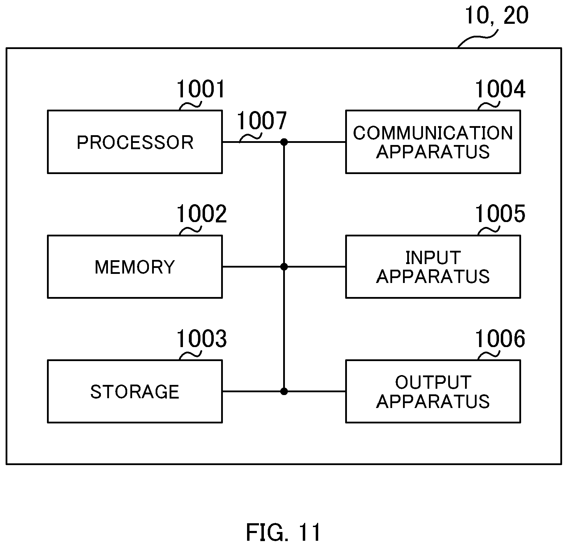

For example, the base station, user equipment, and the like according to an embodiment of the present disclosure may function as a computer that executes processing of a radio communication method of the present disclosure. FIG. 11 illustrates one example of a hardware configuration of an IAB node and a user equipment according to one embodiment of the present disclosure. IAB node 10 and user equipment 20 described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of IAB node 10 and of user equipment 20 may include one apparatus or a plurality of apparatuses illustrated in the drawings or may not include part of the apparatuses.

The functions of IAB node 10 and user equipment 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 100 and the like as described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 100 of IAB node 10 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, antennas and the like of the base station and the user equipment may be realized by communication device 1004. A transmission/reception section may be implemented with a transmission section and a reception section physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, IAB node 10 and user equipment 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification and Signaling of Information>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The aspects and embodiments described in the present specification may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a user equipment in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user equipment. For example, the aspects and the embodiments of the present disclosure may find application in a configuration that results from replacing communication between the base station and the user equipment with communication between multiple user equipments (such communication may, e.g., be referred to as device-to-device (D2D), vehicle-to-everything (V2X), or the like). In this case, user equipment 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the user equipment in the present disclosure may be replaced with the base station. In this case, base station 10 is configured to have the functions that user equipment 20 described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user equipment) on a TTI-by-TTI basis to each user equipment. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

One aspect of the present disclosure is useful for radio communication systems.

### Reference Signs List

- 10, 10A, 10B, 10C: IAB node
- 20: User equipment
- 100: Control section
- 101: Control Unit (CU)
- 102: Mobile-Termination (MT)
- 103: Distributed Unit (DU)

## Claims

1. A radio node, comprising:
a reception section that receives configuration information for at least one of transmission and measurement of a signal including information on synchronization; and
a control section that controls a timing of at least one of the transmission and measurement of the signal based on the configuration information.

2. The radio node according to claim 1, wherein
the configuration information includes pieces of identification information corresponding respectively to a plurality of patterns of the timing of at least one of the transmission and measurement of the signal, the timing being different between the plurality of patterns.

3. The radio node according to claim 2, wherein,
when specific identification information is designated, the control section controls the timing of at least one of the transmission and measurement of the signal based on one of the plurality of patterns corresponding to the designated identification information.

4. The radio node according to claim 2 or 3, wherein,
when no specific identification information is designated, the control section selects one of the plurality of patterns, and controls the timing of at least one of the transmission and measurement of the signal based on the selected pattern.

5. The radio node according to claim 1, wherein
the control section determines not to perform the transmission of the signal at at least one of a plurality of transmission timings, or determines not to perform the measurement of the signal at at least one of a plurality of measurement timings.

6. A radio communication method, comprising steps performed by a radio node of:
receiving configuration information for at least one of transmission and measurement of a signal including information on synchronization; and
controlling a timing of at least one of the transmission and measurement of the signal based on the configuration information.
